# FASCICULE DE BREVET EUROPEEN

(11) **EP 3 298 324 B1**
(45) Date de publication et mention de la délivrance du brevet: **24.08.2022**
(21) Numéro de dépôt: 16732690.9
(22) Date de dépôt: 20.05.2016
(51) Int. Cl.: B60Q 1/00, B60Q 1/04, B60J 5/10, F21S 43/20, B60Q 1/26, F21S 43/27

(54) **HAYON DE VÉHICULE AUTOMOBILE MUNI D'UN BLOC OPTIQUE AVEC SURFACE DE ZONE D'ÉCLAIRAGE OPTIMISÉE ET PROCÉDÉ D'ASSEMBLAGE D'UN HAYON DE VÉHICULE**
HECKKLAPPE EINES KRAFTFAHRZEUG MIT SCHEINWERFER MIT OPTIMIERTER BELEUCHTUNGSZONE UND MONTAGEVERFAHREN EINER HECKKLAPPE
MOTOR VEHICLE TAILGATE EQUIPPED WITH A HEADLAMP UNIT HAVING AN OPTIMISED ILLUMINATION ZONE AND METHOD OF MOUNTING A MOTOR VEHICLE TAIL GATE

(30) Priorité: 22.05.2015 FR 1554639
(43) Date de publication de la demande: 28.03.2018
(73) Titulaire: Compagnie Plastic Omnium, 69007 Lyon (FR)
(72) Inventeur: LETERRIER, Franck, 01150 Lagnieu (FR); STRUSS, Martin, 84103 Bratislava (SK); COUDRON, Philippe, 69300 Caluire Et Cuire (FR); KHAYAT, Issam, 01150 Sainte-Julie (FR)
(74) Mandataire: LLR
(86) Numéro de dépôt international: PCT/FR2016/051204
(87) Numéro de publication internationale: WO 2016/189237

(56) Documents cités:
- EP-A1- 0 256 399
- EP-A1- 2 384 917
- WO-A1-2012/013811
- WO-A1-2015/033076
- FR-A1- 2 928 894
- FR-A1- 2 975 953
- JP-A- 2014 123 547
- JP-U- S6 379 237
- US-B1- 8 985 675

## Description

La présente invention concerne le domaine technique des ouvrants arrières de véhicule automobile, notamment du type hayon. En particulier, l'invention concerne un hayon supportant un dispositif optique, tel qu'un bloc optique, un radar ou une caméra par exemple.

Généralement, un hayon se compose d'une peau extérieure, constituant un panneau et intégrant en totalité ou en partie certains des équipements extérieurs visibles depuis l'extérieur du véhicule, et d'une doublure intérieure se composant d'une partie supérieure comportant une ouverture prévue pour accueillir une lunette arrière, et d'une partie inférieure dont la zone centrale comporte des éléments techniques.

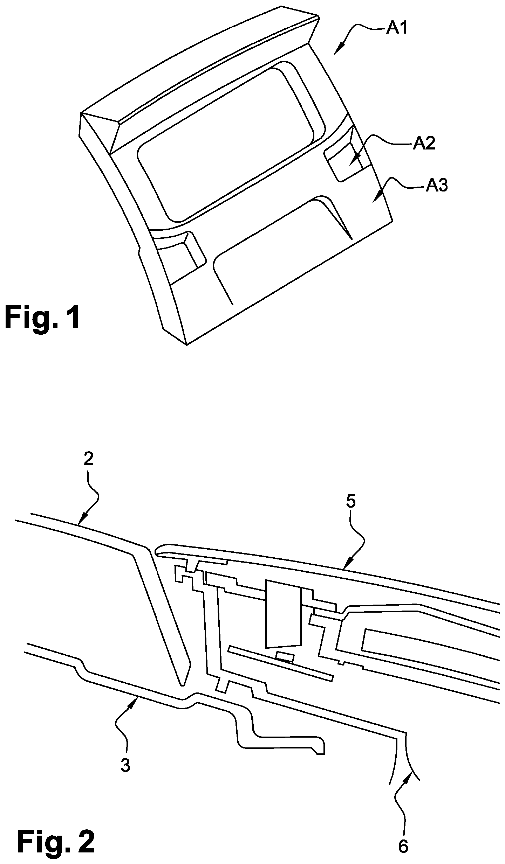

Les hayons A1 connus (figure 1) supportant un dispositif optique, comportent un emplacement A2 dédié à la fonction optique. Cet emplacement débouche au travers de la peau extérieure A3. Par exemple, cet emplacement peut s'inscrire dans un évidement de la peau extérieure du hayon.

Dans ce type de hayon, le bloc optique est donc un ensemble qui est rapporté sur la doublure du hayon, après assemblage de la peau externe et de la doublure. Le bloc optique comporte un boitier fermé par un vitrage.

Cependant, l'assemblage du vitrage sur le boitier engendre une zone d'assemblage (au niveau du rebord périphérique du vitrage) ayant une surface importante. Dans la zone d'assemblage, les éléments du boitier otique et les éléments de fixation bloquent la lumière émise. Cette surface d'assemblage réduit donc la surface du vitrage apte à être traversée par la lumière. Le vitrage comporte ainsi en périphérie une zone non éclairée.

La totalité du vitrage visible depuis l'extérieur du véhicule, ne peut donc être utilisée pour transmettre la lumière (il reste un bord mort périphérique).

Il est également habituel d'équiper ces zones d'assemblage avec des éléments de masquage afin que les éléments de fixation et le boitier ne soient pas visibles à travers le vitrage depuis l'extérieur du véhicule.

L'invention a pour but de remédier à ces inconvénients en fournissant un hayon de véhicule automobile muni d'un dispositif optique avec surface de zone utile (d'éclairage pour un bloc optique) optimisée. Optimiser cette surface consiste à augmenter la proportion de la surface du vitrage visible depuis l'extérieur du véhicule, apte à transmettre un signal optique (par exemple la lumière dans le cas d'un bloc optique).

L'invention y parvient en masquant, derrière la peau extérieure du hayon, au moins une partie de la zone d'assemblage du vitrage et du boitier.

Ainsi, l'invention, qui est définie dans la revendication 1, concerne un hayon de véhicule automobile du type comportant une peau extérieure et une doublure intérieure, et comportant au moins un dispositif optique muni d'un vitrage fermant un boitier. Au moins une partie de la zone d'assemblage entre le boîtier et le vitrage est située sous la peau extérieure.

L'invention peut en outre comporter l'une ou plusieurs des caractéristiques suivantes :
- la doublure intérieure forme le boîtier ;
- le boîtier est rapporté sur la doublure intérieure par exemple par collage ;
- la peau extérieure est en matière thermoplastique ou matière thermodurcissable ;
- la doublure intérieure est en matière thermoplastique chargée ou matière thermodurcissable ;
- le hayon comporte au moins une seconde zone d'assemblage entre le boîtier et le vitrage située en bordure périphérique du hayon, le vitrage comportant une zone réalisant un retour sensiblement vers l'avant du véhicule une fois le hayon monté sur un véhicule, ladite seconde zone d'assemblage étant positionnée au niveau de la zone réalisant un retour, de façon à ne pas réduire une zone utile d'éclairage du véhicule ;
- le boîtier permet de fixer une surface interne de la peau extérieure ;
- le boîtier comporte au niveau de la première zone d'assemblage un premier plateau, puis se poursuit vers le milieu du hayon, par un épaulement conduisant à un second plateau, le premier plateau servant de support de fixation du vitrage, et le second plateau servant de support de fixation de la peau extérieure ;
- le vitrage comporte sur sa périphérie, au moins au niveau de la première zone d'assemblage un premier plateau, puis se poursuit vers l'extérieur du hayon, par un épaulement conduisant à une zone utile pour l'éclairage du véhicule, l'épaulement permettant à la zone utile pour l'éclairage d'être positionnée sensiblement dans le même plan que la peau extérieure ;
- le dispositif optique est un bloc optique.

L'invention concerne également un procédé d'assemblage, tel que défini dans la revendication 11, d'un hayon de véhicule automobile du type comportant une peau extérieure et une doublure intérieure, et comportant au moins un dispositif optique muni d'un vitrage fermant un boitier. Au cours de ce procédé, on réalise, dans l'ordre, les étapes suivantes :
- on intègre le boîtier à la doublure intérieure, de manière à ce que le boîtier soit porté par la doublure intérieure ;
- on fixe le vitrage sur le boîtier en fermant de façon étanche le boîtier ; et
- on fixe la peau extérieure sur la doublure intérieure et sur une partie du vitrage de façon à recouvrir une première zone d'assemblage entre le boîtier et le vitrage , le vitrage étant fixé sur une surface interne de la peau extérieure au niveau de la première zone d'assemblage, .

Selon l'invention on peut intégrer le boîtier à la doublure intérieure par moulage ou par collage, on peut fixer le vitrage au boîtier par collage, et on peut fixer la peau extérieure au vitrage par collage.

Enfin, selon un mode de réalisation, le dispositif optique est un bloc optique, et l'on positionne sur le boitier un ensemble d'éléments permettant une fonction d'éclairage du bloc optique.

L'invention sera mieux comprise à la lecture de la description qui va suivre, donnée uniquement à titre d'exemple et faite en se référant aux dessins dans lesquels :
- la figure 1 illustre un hayon de véhicule automobile selon l'art antérieur ;
- la figure 2 est une section horizontale, au niveau du bloc optique, d'un hayon selon l'art antérieur ;
- la figure 3 est une section, au niveau du bloc optique, d'un hayon selon un premier mode de réalisation de l'invention ;
- la figure 4 est une section, au niveau du bloc optique, d'un hayon selon un second mode de réalisation de l'invention ;
- la figure 5 illustre une zone d'assemblage classique entre un boîtier optique et un vitrage ;
- la figure 6 illustre un exemple de zone d'assemblage selon l'invention entre un boîtier optique et un vitrage, permettant de ne pas réduire la zone utile d'éclairage du véhicule.

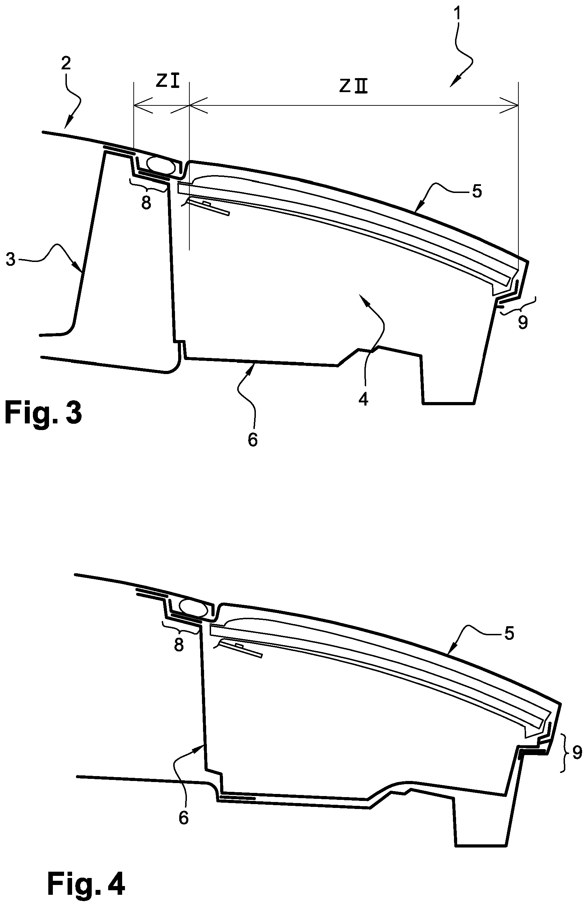

On se réfère maintenant aux figures 3 et 4 qui illustrent deux modes de réalisation du hayon 1 de véhicule automobile selon l'invention.

Le hayon 1 comporte une peau extérieure 2 d'aspect, une doublure intérieure 3 de structure, et au moins un dispositif optique 4. Selon l'exemple de réalisation décrit, le dispositif optique 4 est un bloc optique. Il pourrait s'agir alternativement d'un radar, d'une caméra ou de tout autre dispositif optique.

La peau extérieure 2 d'aspect est avantageusement réalisée en matière plastique, notamment en matière thermoplastique chargée ou matière thermodurcissable. La peau extérieure 2 constitue un panneau monobloc ou bi bloc, et peut intégrer en totalité ou en partie certains des équipements extérieurs visibles depuis l'extérieur du véhicule (commande d'ouverture du hayon ou de la lunette, emblème, système de lavageessuyage, serrure, butées, plaque d'immatriculation...).

La doublure intérieure 3 de structure est avantageusement réalisée en matière plastique, notamment en matière thermodurcissable ou en matière thermoplastique chargée. La matière thermoplastique constituant la doublure intérieure 3 est par exemple chargée de fibres de verre, de fibres de carbone ou de talc pour accroître ses propriétés mécaniques. La peau extérieure 2 recouvre au moins partiellement la doublure intérieure 3.

Le bloc optique 4 est muni d'un vitrage 5 et d'un boîtier 6. Le boîtier 6 est porté par la doublure intérieure 3. Comme on peut le voir sur les figures 3 et 4, le boîtier 6 est fermé par le vitrage 5, de façon à former un logement étanche. Par ailleurs, on peut rapporter dans le boîtier 6, à l'intérieur du logement, tout autre élément permettant de réaliser la fonction éclairage : couvercle, lampe, réflecteur, masque...

Selon un mode de réalisation, la doublure intérieure 3 forme le boîtier 6, comme illustré sur la figure 3. En d'autres termes, la doublure intérieure 3 comporte une zone, venue de moulage, constituant le boîtier 6 apte à recevoir tous les éléments permettant de réaliser la fonction éclairage.

Selon un autre mode de réalisation le boîtier 6 est une pièce différente de la doublure intérieure 3. Le boîtier 6 est alors rapporté sur la doublure intérieure 3, comme illustré sur la figure 4, par un moyen tel que le collage ou tout autre moyen permettant le maintien des deux parties. De préférence on utilise un moyen permettant de réaliser une étanchéité entre la doublure intérieure 3 et le boîtier 6.

Lorsque le boîtier 6 est rapporté sur la doublure intérieure 3 par collage, l'étanchéité est réalisée par le collage lui-même. Lorsque le boîtier 6 est rapporté sur la doublure intérieure 3 par un moyen permettant un démontage facile, par exemple par vissage ou clippage, alors l'étanchéité peut être obtenue par le biais d'un joint, en élastomère par exemple.

Ainsi, on appelle boitier l'organe ou la zone d'un organe portant les fonctions d'éclairage du bloc optique 4.

Dans les deux cas, le vitrage 5 d'optique ferme le boîtier 6. Pour ce faire, le vitrage 5 est positionné sur le boîtier 6, et le vitrage 5 est fixé au boîtier 6 au niveau de zones d'assemblage (8, 9) entre le boîtier 6 et le vitrage 5, munies de moyens d'étanchéité 24, tels que des joints, ou un point de collage.

Selon l'invention, au moins une de ces zones d'assemblage (8) est située sous la peau extérieure 2 d'aspect, de façon à ce que la peau extérieure 2 ne recouvre le vitrage 5 que dans cette zone, et de façon à ce que la zone d'assemblage (8) entre le boîtier 6 et le vitrage 5 soit masquée par la peau extérieure 2 lorsque l'on regarde l'arrière de véhicule depuis l'extérieur.

De cette façon, le vitrage comporte une première zone (ZI), au niveau de la zone d'assemblage masquée (8), et une seconde zone (ZII) constituant une zone utile pour réaliser une fonction d'éclairage du véhicule.

Au niveau de la zone d'assemblage masquée 8, le vitrage 5 est fixé sur la surface interne de la peau extérieure 2, c'est-à-dire la surface faisant face à la doublure intérieure 3.

De préférence, toute la périphérie du vitrage 5 est masquée selon cette technique.

Toutefois, si un bord se situe en périphérie du véhicule, le hayon peut alors comporter trois zones d'assemblage masquées 8 :
- L'une est située vers le milieu du hayon, selon l'axe Y ;
- L'une est située vers le haut du hayon, selon l'axe Z ;
- L'une est située vers le bas du hayon, selon l'axe Z.

Et en bordure périphérique du hayon 1, la zone d'assemblage 9 se situe de préférence dans un plan sensiblement parallèle à l'axe X du véhicule (figures 3 et 4, et 6), de façon à ne pas réduire la zone utile pour l'éclairage du véhicule.

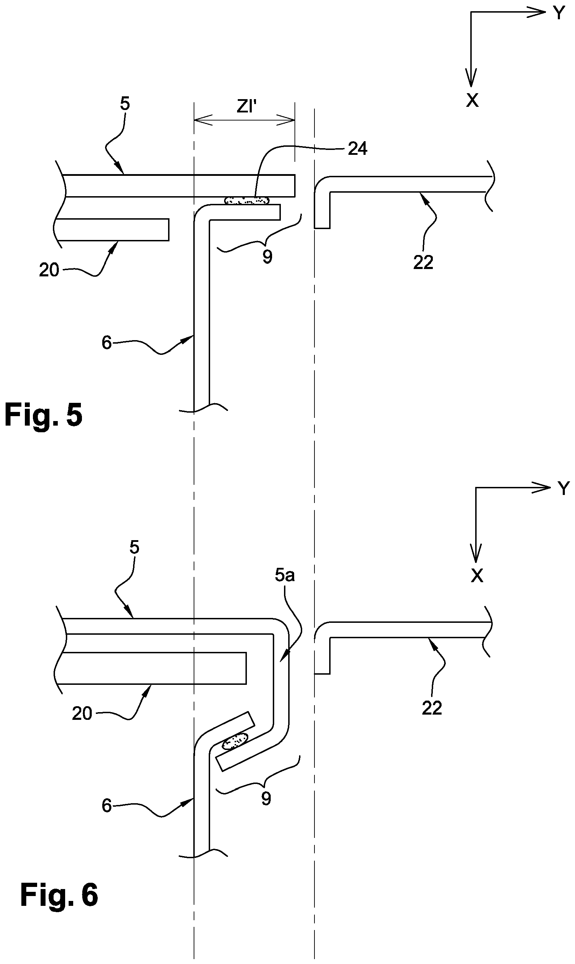

La figure 6 illustre en détails la zone d'assemblage 9 ainsi que sa fonction permettant de ne pas réduire la zone utile d'éclairage du véhicule.

La figure 5 illustre un mode de réalisation connu d'une telle zone d'assemblage. Comme on peut le constater sur cette figure, la zone d'assemblage se situe dans une partie (ZI') de la zone utile d'éclairage du véhicule, réduisant ainsi cette zone, et donc l'éclairage du véhicule.

Afin de palier à cette limitation, et comme l'illustre la figure 6, la zone d'assemblage 9 selon l'invention se situe derrière la source de lumière 20, lorsque l'on observe le véhicule de derrière. La source de lumière est l'élément du boitier optique 6 permettant de réaliser la fonction éclairage (lampe, guide lumière...). Ainsi la zone ZII telle que définit sur la figure 3, n'est pas limitée. On peut allonger la source lumineuse 20 plus loin vers le bord extérieur du boitier optique 6, comme l'illustre, en comparaison, les figures 5 et 6.

Pour ce faire, le vitrage 5 comporte une zone 5a réalisant un retour sensiblement vers l'avant du véhicule une fois le hayon 1 monté sur un véhicule, entre la caisse 22 et le hayon 1. La seconde zone d'assemblage est positionnée au niveau de cette zone 5a réalisant un retour, de façon à ne pas réduire la zone utile d'éclairage du véhicule.

En effet, ce retour 5a permet de contourner la source lumineuse 20, afin de décaler la zone d'assemblage 9, de façon à ce qu'elle ne soit pas située sur le chemin des rayons lumineux émis directionnellement par la source de lumière 20 : la zone d'assemblage 9 ne constitue plus un obstacle au cheminement des rayons lumineux.

Ainsi, comme l'illustre la figure 6 dans un plan (X, Y), la zone d'assemblage 9 est déportée en dehors de la zone d'éclairage, derrière la source 20. De façon classique dans l'automobile, l'axe X correspond à la longueur du véhicule et l'axe Y correspond à la largeur du véhicule.

Le vitrage 5 d'optique est fixé sur la surface interne de la peau extérieure 2 par un moyen tel que le collage ou tout autre moyen permettant le maintien des deux parties. On peut par exemple prévoir des formes complémentaires entre la peau extérieure 2 et le vitrage 5, afin qu'ils puissent être fixées l'un à l'autre par emboîtement.

Selon un mode de réalisation, le boîtier 6 permet de fixer la surface interne, c'est-à-dire la surface faisant face à la doublure intérieure 3, de la peau extérieure 2. Selon un exemple, le boîtier 6 comporte au niveau de la zone d'assemblage masquée (8) un premier plateau, puis se poursuit vers le milieu du hayon 1 (selon l'axe Y du véhicule), par un épaulement conduisant à un second plateau. Le premier plateau servant de support de fixation du vitrage 5, et le second plateau servant de support de fixation de la peau extérieure 2.

Selon les exemples de réalisations illustrés sur les figures 3 et 4, le boîtier d'optique 6 a une section selon, l'axe Y du véhicule sensiblement en U. Une des extrémités du U se situe vers le milieu du véhicule, selon l'axe Y, et est appelée extrémité interne. L'autre extrémité se situe vers l'extérieur du véhicule, et est appelée extrémité externe.

Les zones d'assemblage (8, 9) entre le boîtier 6 et le vitrage 5 se situent alors au niveau des deux extrémités du U. La zone d'assemblage de l'extrémité interne est appelée zone d'assemblage interne 8, il s'agît de la zone d'assemblage masquée. La zone d'assemblage de l'extrémité externe est appelée zone d'assemblage externe 9.

Selon un mode de réalisation, le vitrage 5 comporte en sa périphérie, et au niveau de la première zone d'assemblage 8, un premier plateau, puis se poursuit vers l'extérieur du hayon (1), par un épaulement conduisant à une zone utile pour l'éclairage du véhicule, l'épaulement permettant à cette dernière zone d'être positionnée sensiblement dans le même plan que la peau extérieure 2.

L'invention concerne également un procédé d'assemblage d'un hayon selon l'invention, comportant au moins un bloc optique fermé par un vitrage d'optique. Le procédé est défini par la revendication 11.

Selon un mode de réalisation, on intègre le boîtier 6 à la doublure intérieure 3 par moulage, c'est-à-dire que le boitier 6 est réalisé par moulage lors du moulage de la doublure 3, doublure 3 et boitier 6 ne formant alors qu'une seule pièce, réalisée en une seule étape.

Selon un autre mode de réalisation, on intègre le boîtier 6 à la doublure intérieure 3 par collage.

De façon avantageuse, car permettant de réaliser une étanchéité, on assemble le vitrage 5 au boîtier d'optique 6 par collage.

De façon avantageuse, on assemble la peau extérieure 2 et le vitrage 5 par collage.

Selon un mode de réalisation, le dispositif optique 4 est un bloc optique, et l'on positionne sur le boitier 6 un ensemble d'éléments permettant une fonction d'éclairage du bloc optique 4.

## Revendications

1. Hayon (1) de véhicule automobile du type comportant une peau extérieure (2) en matière plastique et une doublure intérieure (3), et comportant au moins un dispositif optique (4) muni d'un vitrage (5) fermant un boitier (6), **caractérisé en ce qu'**au moins une première zone d'assemblage (8) entre le boîtier (6) et le vitrage (5) est située sous la peau extérieure (2), le vitrage (5) étant fixé sur une surface interne de la peau extérieure (2) au niveau de la première zone d'assemblage (8), par exemple par collage, le boîtier (6) étant porté par la doublure intérieure (3).

2. Hayon (1) selon la revendication 1, dans lequel la doublure intérieure (3) forme le boîtier (6).

3. Hayon (1) selon la revendication 1, dans lequel le boîtier (6) est rapporté sur la doublure intérieure (3) par exemple par collage.

4. Hayon (1) selon l'une des revendications précédentes, dans lequel la peau extérieure (2) est en matière thermoplastique ou matière thermodurcissable.

5. Hayon (1) selon l'une des revendications précédentes, dans lequel la doublure intérieure (3) est en matière plastique, notamment en matière thermoplastique chargée ou matière thermodurcissable.

6. Hayon (1) selon l'une des revendications précédentes, comportant au moins une seconde zone d'assemblage (9) entre le boîtier (6) et le vitrage (5) située en bordure périphérique du hayon (1), le vitrage (5) comportant une zone (5a) réalisant un retour sensiblement vers l'avant du véhicule une fois le hayon monté sur un véhicule, ladite seconde zone d'assemblage (9) étant positionnée au niveau de la zone (5a) réalisant un retour, de façon à ne pas réduire une zone utile d'éclairage du véhicule.

7. Hayon (1) selon l'une des revendications précédentes, dans lequel le boîtier (6) permet de fixer une surface interne de la peau extérieure (2).

8. Hayon (1) selon la revendication 7, dans lequel le boîtier (6) comporte au niveau de la première zone d'assemblage (8) un premier plateau, puis se poursuit vers le milieu du hayon (1), par un épaulement conduisant à un second plateau, le premier plateau servant de support de fixation du vitrage (5), et le second plateau servant de support de fixation de la peau extérieure (2).

9. Hayon (1) selon l'une des revendications précédentes, dans lequel le vitrage (5) comporte sur sa périphérie, au moins au niveau de la première zone d'assemblage (8) un premier plateau, puis se poursuit vers l'extérieur du hayon (1), par un épaulement conduisant à une zone utile pour l'éclairage du véhicule, l'épaulement permettant à la zone utile pour l'éclairage d'être positionnée sensiblement dans le même plan que la peau extérieure (2).

10. Hayon (1) selon l'une des revendications précédentes, dans lequel le dispositif optique (4) est un bloc optique.

11. Procédé d'assemblage d'un hayon (1) de véhicule automobile du type comportant une peau extérieure (2) et une doublure intérieure (3), et comportant au moins un dispositif optique (4) muni d'un vitrage (5) fermant un boitier (6), **caractérisé en ce que** l'on réalise, dans l'ordre, les étapes suivantes :
- on intègre le boîtier (6) à la doublure intérieure (3) de manière à ce que le boîtier (6) soit porté par la doublure intérieure (3);
- on fixe le vitrage (5) sur le boîtier (6) en fermant de façon étanche le boîtier (6) ; et
- on fixe la peau extérieure (2) sur la doublure intérieure (3) et sur une partie du vitrage (5) de façon à recouvrir au moins une première zone d'assemblage (8) entre le boîtier (6) et le vitrage (5), le vitrage (5) étant fixé sur une surface interne de la peau extérieure (2) au niveau de la première zone d'assemblage (8).

12. Procédé selon la revendication 11, dans lequel on intègre le boîtier (6) à la doublure intérieure (3) par moulage ou par collage.

13. Procédé selon l'une des revendications 11 et 12, dans lequel on fixe le vitrage (5) au boîtier (6) par collage.

14. Procédé selon l'une des revendications 11 à 13, dans lequel on fixe la peau extérieure (2) au vitrage (5) par collage.

15. Procédé selon l'une des revendications 11 à 14, dans lequel le dispositif optique (4) est un bloc optique, et l'on positionne sur le boitier (6) un ensemble d'éléments permettant une fonction d'éclairage du bloc optique (4).

## Patentansprüche

1. Heckklappe (1) eines Kraftfahrzeugs des Typs, der eine Außenhaut (2) aus Kunststoff und eine Innenauskleidung (3) aufweist und mindestens eine optische Vorrichtung (4) aufweist, die mit einer Verglasung (5) versehen ist, die ein Gehäuse (6) verschließt, **dadurch gekennzeichnet, dass** sich mindestens einen ersten Montagebereich (8) zwischen dem Gehäuse (6) und der Verglasung (5) unter der Außenhaut (2) befindet, wobei die Verglasung (5) auf einer Innenfläche der Außenhaut (2) in Höhe des ersten Montagebereichs (8) befestigt ist, beispielsweise durch Kleben, wobei das Gehäuse (6) von der Innenauskleidung (3) getragen wird.

2. Heckklappe (1) nach Anspruch 1, wobei die Innenauskleidung (3) das Gehäuse (6) bildet.

3. Heckklappe (1) nach Anspruch 1, bei der das Gehäuse (6) auf der Innenauskleidung (3) angebracht ist, z. B. durch Kleben.

4. Heckklappe (1) nach einem der vorhergehenden Ansprüche, wobei die Außenhaut (2) aus thermoplastischem Material oder wärmehärtendem Material besteht.

5. Heckklappe (1) nach einem der vorhergehenden Ansprüche, wobei die Innenauskleidung (3) aus Kunststoff besteht, insbesondere aus gefülltem thermoplastischem Material oder wärmehärtendem Material.

6. Heckklappe (1) nach einem der vorhergehenden Ansprüche, mit mindestens einem zweiten Montagebereich (9) zwischen dem Gehäuse (6) und der Verglasung (5), der sich am Umfangsrand der Heckklappe (1) befindet, wobei die Verglasung (5) einen Bereich (5a) aufweist, der eine Rückführung im Wesentlichen zur Vorderseite des Fahrzeugs hin bildet, sobald die Heckklappe an einem Fahrzeug montiert ist, wobei der zweite Montagebereich (9) auf der Höhe des Bereichs (5a) positioniert ist, der eine Rückführung bildet, so dass ein Nutzbereich der Fahrzeugbeleuchtung nicht reduziert wird.

7. Heckklappe (1) nach einem der vorhergehenden Ansprüche, wobei das Gehäuse (6) es ermöglicht, eine Innenfläche der Außenhaut (2) zu befestigen.

8. Heckklappe (1) nach Anspruch 7, bei der das Gehäuse (6) im Bereich des ersten Montagebereichs (8) eine erste Platte aufweist und dann zur Mitte der Heckklappe (1) hin in eine Schulter übergeht, die zu einer zweiten Platte führt, wobei die erste Platte als Träger für die Befestigung der Verglasung (5) dient und die zweite Platte als Träger für die Befestigung der Außenhaut (2) dient.

9. Heckklappe (1) nach einem der vorhergehenden Ansprüche, bei der die Verglasung (5) an ihrem Umfang zumindest im Bereich des ersten Montagebereichs (8) ein erstes Plateau aufweist und sich dann zur Außenseite der Heckklappe (1) hin in einer Schulter fortsetzt, die zu einem für die Beleuchtung des Fahrzeugs nützlichen Bereich führt, wobei die Schulter es dem für die Beleuchtung nützlichen Bereich ermöglicht, im Wesentlichen in derselben Ebene wie die Außenhaut (2) positioniert zu werden.

10. Heckklappe (1) nach einem der vorhergehenden Ansprüche, wobei die optische Vorrichtung (4) ein optischer Block ist.

11. Verfahren zur Montage einer Heckklappe (1) eines Kraftfahrzeugs des Typs mit einer Außenhaut (2) und einer Innenauskleidung (3) und mit mindestens einer optischen Vorrichtung (4), die mit einer Verglasung (5) versehen ist, die ein Gehäuse (6) verschließt, **dadurch gekennzeichnet, dass** man in der Reihenfolge die folgenden Schritte durchführt:
- Integrieren des Gehäuses (6) in die Innenauskleidung (3), so dass das Gehäuse (6) von der Innenauskleidung (3) getragen wird;
- Befestigen der Verglasung (5) an dem Gehäuse (6), wobei das Gehäuse (6) dicht verschlossen wird;
und
- Befestigen der Außenhaut (2) an der Innenauskleidung (3) und an einem Teil der Verglasung (5) derart, dass sie mindestens einen ersten Montagebereich (8) zwischen dem Gehäuse (6) und der Verglasung (5) abdeckt, wobei die Verglasung (5) an einer Innenfläche der Außenhaut (2) in Höhe des ersten Montagebereichs (8) befestigt wird.

12. Verfahren nach Anspruch 11, bei dem das Gehäuse (6) durch Formen oder Kleben in die Innenauskleidung (3) integriert wird.

13. Verfahren nach einem der Ansprüche 11 oder 12, bei dem die Verglasung (5) durch Kleben am Gehäuse (6) befestigt wird.

14. Verfahren nach einem der Ansprüche 11 bis 13, bei dem die Außenhaut (2) durch Kleben an der Verglasung (5) befestigt wird.

15. Verfahren nach einem der Ansprüche 11 bis 14, bei dem die optische Vorrichtung (4) ein optischer Block ist und auf dem Gehäuse (6) eine Gruppe von Elementen positioniert wird, die eine Beleuchtungsfunktion des optischen Blocks (4) ermöglichen.

## Claims

1. Tailgate (1) of a motor vehicle of a type comprising an outer skin (2) made of plastic material and an inner lining (3), and comprising at least one optical device (4) provided with a glazing (5) closing a housing (6), **characterized in that** at least one first assembly area (8) between the housing (6) and the glazing (5) is located under the outer skin (2), the glazing (5) being fixed on an inner surface of the outer skin (2) at the level of the first assembly area (8), for example by gluing, the housing (6) being borne by the inner lining (3).

2. Tailgate (1) according to claim 1, wherein the inner lining (3) forms the housing (6).

3. Tailgate (1) according to claim 1, wherein the housing (6) is mounted on the inner lining (3) for example by gluing.

4. Tailgate (1) according to one of the preceding claims, wherein the outer skin (2) is made of thermoplastic material or thermosetting material.

5. Tailgate (1) according to one of the preceding claims, wherein the inner lining (3) is made of plastic material, in particular of charged thermoplastic material or thermosetting material.

6. Tailgate (1) according to one of the preceding claims, comprising at least one second assembly area (9) between the housing (6) and the glazing (5) located at the peripheral edge of the tailgate (1), the glazing (5) having an area (5a) making a turn substantially to the front of the vehicle once the tailgate is mounted on a vehicle, said second assembly area (9) being located at the level of the area (5a) making a turn, so as not to reduce a usable area for lighting the the vehicle.

7. Tailgate (1) according to one of the preceding claims, wherein the housing (6) allows to fix an inner surface of the outer skin (2).

8. Tailgate (1) according to claim 7, wherein the housing (6) comprises, at the level of the first assembly area (8) a first flat surface, then continues towards the middle of the tailgate (1), via a shoulder leading to a second flat surface, the first flat surface serving as a support for fixing the glazing (5) and the second flat surface serving as a support for fixing the outer skin (2).

9. Tailgate (1) according to one of the preceding claims, wherein the glazing (5) comprises, on its periphery, at least at the level of the first assembly area (8) a first flat surface, then continues to the outside of the tailgate (1), by a shoulder leading to an usable area for lighting of the vehicle, the shoulder allowing the usable area to be positioned substantially in the same plane as the outer skin (2).

10. Tailgate (1) according to one of the preceding claims, wherein the optical device (4) is a headlight unit.

11. Method of assembling a tailgate (1) of a motor vehicle of the type having an outer skin (2) and an inner lining (3), and comprising at least one optical device (4) provided with a glazing (5) closing a housing (6), **characterized in that** the following steps are carried out, in order:
- the housing (6) is joined to the inner lining (3) such that the case (6) is borne by the inner lining (3);
- the glazing (5) is fixed on the housing (6) by closing the housing (6) in a watertight manner; and
- the outer skin (2) is fixed on the inner lining (3) and on part of the glazing (5) so as to cover at least one first assembly area (8) between the housing (6) and the glazing (5), the glazing (5) being fixed on an inner surface of the outer skin (2) at the level of the first assembly area (8).

12. A method according to claim 11, wherein the housing (6) is joined to the inner lining (3) by molding or gluing.

13. A method according to one of claims 11 and 12, wherein the glazing (5) is fixed to the housing (6) by gluing.

14. A method according to one of claims 11 to 13, wherein the outer skin (2) is fixed to the glazing (5) by gluing.

15. A method according to one of claims 11 to 14, wherein the optical device (4) is headlight unit, and a set of elements allowing a lighting function of the headlight unit (4) are positioned on the housing (6).
